# EUROPEAN PATENT SPECIFICATION

(11) **EP 4 249 567 B1**
(45) Date of publication and mention of the grant of the patent: **04.06.2025**
(21) Application number: 21894742.2
(22) Date of filing: 19.11.2021
(51) Int. Cl.: C09J 11/06, C09J 123/08, C09J 123/14, C09J 123/20

(54) **ADHESIVE COMPOSITION**
KLEBSTOFFZUSAMMENSETZUNG
COMPOSITION ADHÉSIVE

(30) Priority: 19.11.2020 JP 2020192639
(43) Date of publication of application: 27.09.2023
(73) Proprietor: MORESCO Corporation, Kobe-shi, Hyogo 650-0047 (JP)
(72) Inventor: TSUKUDA, Hideki, Kobe-shi, Hyogo 650-0047 (JP); HASHIMOTO, Masahiko, Kobe-shi, Hyogo 650-0047 (JP)
(74) Representative: Bittner, Thomas L.
(86) International application number: PCT/JP2021/042516
(87) International publication number: WO 2022/107871

(56) References cited:
- EP-A1- 2 915 825
- EP-B1- 3 498 799
- WO-A1-2020/047031
- JP-A- 2003 165 963
- JP-A- H0 539 469
- JP-A- H0 625 620
- JP-A- H01 266 175
- JP-A- H05 148 465
- JP-A- H07 314 623
- JP-A- S5 496 539
- JP-A- S5 911 120

## Description

The present invention relates to an adhesive composition.

### Background

A self-adhesive agent refers to an adhesive agent that has low adhesive force with respect to another material when being stuck to the another material, but that exhibits strong adhesive force (self-adhesiveness) when adhesive surfaces of the self-adhesive agent are bonded together and pressure is applied thereto.

Such a self-adhesive agent does not require a device such as a heat sealer and a heat source, and is easy to work with. In addition, the self-adhesive agent does not require release paper for covering an adhesive surface thereof and a releasing treatment on a back surface of a tape. Based on these facts, self-adhesive agents are widely used in applications such as binding tapes for binding various articles (such as raw vegetables, raw flowers, documents, newspapers, and magazines), and adhesive-type envelopes.

In JP 2004-161962, a solvent-type adhesive (adhesive tape) is disclosed as an adhesive having self-adhesive force greater than adhesive force to a SUS substrate. The solvent-type adhesive is obtained by applying, to the substrate, an adhesive solution containing fine particles having large particle diameters and an adhesive component such as a rubber-based adhesive, and drying the adhesive solution. However, such a solvent-type adhesive needs taking a time to dry the solvent after application. Therefore, it is not possible to increase productivity, and large-scale equipment such as a drying oven is required for production of the solvent-type adhesive. In addition, in a case where the solvent-type adhesive is used in a binding tape for binding vegetables and the like, a residual solvent sometimes poses a problem.

In recent years, in order to solve such problems to improve productivity and reduce a residual solvent, a hot melt-type self-adhesive agent which is of a solvent-free type and can be produced at high speed has been developed. JP 2017-149938 discloses a hot melt-type adhesive composition containing a styrene-diene-based block copolymer, a specific tackifier, an inorganic filler having a specific particle diameter, and a plasticizer. The adhesive composition has large self-adhesive force, low tack on the adhesive surface, and a little residual solvent.

Document EP 2 915 825 A1 relates to polyolefin, adhesive compositions containing the same, and adhesive tape using said adhesive compositions. In the document WO 2020/047031 A1, hot melt adhesives containing phase changing materials are described. The document EP 3 498 799 B1 describes polyethylene and propylene wax for hot melt adhesive.

### Summary

### Technical Problem

However, the hot melt-type adhesive composition with a reduced residual solvent as disclosed in Patent Literature 2 has a problem that the inorganic filler obstructs a filter and an outlet of a coating machine, resulting in decreased productivity.

In view of the above circumstances, an object of an embodiment of the present invention is to provide an adhesive composition that does not contain a solvent and that is excellent in productivity and self-adhesiveness.

### Solution to Problem

The problem is solved by an adhesive composition according to the independent claim 1. Embodiments are the subject matter of dependent claims in the appended set of claims.

### Advantageous Effects of Invention

According to an embodiment of the present invention, it is possible to bring about an effect of providing an adhesive composition that does not contain a solvent and that is excellent in productivity and self-adhesiveness.

### Description of Embodiments

The following description will discuss an embodiment of the present invention. The present invention is, however, not limited to the embodiment below. The present invention is not limited to the arrangements described below, but may be altered in various ways by a skilled person within the scope of the claims. Any embodiment or working example based on a combination of technical means disclosed in different embodiments or Examples is also encompassed in the technical scope of the present invention. Further, it is possible to form a new technical feature by combining the technical means disclosed in the respective embodiments. Numerical expressions such as "A to B" herein indicate "not less (lower) than A and not more (higher) than B" unless otherwise stated.

### [1. Adhesive composition]

The inventors of the present invention, as a result of diligent study in order to attain the above object, have found that, by using an olefin-based polymer as a raw material for an adhesive composition, it is possible to provide a self-adhesive composition that contains no solvent and that is excellent in productivity, without the use of an inorganic filler that causes obstruction in a coating device. As disclosed in JP 2017-149938, in the conventional hot melt-type self-adhesive agent, an inorganic filler is blended in order to provide an adhesive composition having large self-adhesive force and low tack on the adhesive surface. The inventors of the present invention have used an olefin-based polymer as a raw material for an adhesive composition and found, surprisingly, that it is possible to provide, even without an inorganic filler blended, an adhesive composition having excellent self-adhesive force and having low adhesive force to another material when being stuck to the another material. Based on this finding, the inventors of the present invention have accomplished the present invention.

That is, an adhesive composition in accordance with an embodiment of the present invention is an adhesive composition containing an olefin-based polymer, in the adhesive composition, no inorganic particles being blended, and the adhesive composition having a storage modulus at 20°C of 0 to 1.5×10⁷ Pa, and a storage modulus at 40°C of 5.3×10⁵ Pa to 1.0×10⁹ Pa.

According to the configuration, it is possible to provide a self-adhesive composition that does not contain a solvent and that is excellent in productivity.

### (Olefin-based polymer)

The adhesive composition in accordance with an embodiment of the present invention includes an olefin-based polymer. Herein, the olefin-based polymer refers to a polymer obtained by polymerizing one or more types of olefins optionally with a monomer different from olefin. It can be said that the olefin-based polymer is a polymer containing a constituent (olefin component) derived from the olefin. The olefin-based polymer used in the present invention may contain a monomeric component other than the olefin component as a constituent. A proportion of the olefin component contained in the olefin-based polymer is preferably not less than 80% by weight, and more preferably not less than 90% by weight. The olefin-based polymer more preferably contains 100% by weight of the olefin component. That is, the olefin-based polymer is preferably a polyolefin.

Examples of the olefin include, but not limited to, olefins having a carbon number of preferably 2 to 10, and more preferably 2 to 4. Specific examples of the olefin include ethylene, propylene, 1-butene, 2-butene, 1-pentene, 2-pentene, 4-methyl-1-pentene, 1-hexene, 1-octene, 1-nonene, 1-decene, and the like. The olefin-based polymer may be a homopolymer of any of these olefins, or may be a copolymer containing at least two types of olefins selected from these olefins. Among those, the olefin-based polymer more preferably contains, as a constituent, ethylene or α-olefin having a carbon number of 3 to 10. Specific examples of the α-olefin include propylene, 1-butene, 4-methyl-1-pentene, 1-hexene, 1-octene, 1-nonene, and 1-decene. Further preferable examples of the olefin-based polymer include: homopolymers of ethylene, propylene, 1-butene, 4-methyl-1-pentene, 1-hexene, and 1-octene; and copolymers obtained by copolymerization of two or more types selected from ethylene, propylene, 1-butene, 4-methyl-1-pentene, 1-hexene, and 1-octene (e.g., an ethylene-propylene copolymer, a propylene-1 butene copolymer, a terpolymer of ethylene-propylene-1 butene, an ethylene-1-octene copolymer, and the like). One kind of these olefin-based polymers may be used alone, or two or more kinds of these olefin-based polymers may be used in combination.

As the olefin-based polymer, a commercially available product may be used. Examples of commercially available olefin-based polymers include REXTAC (registered trademark) series manufactured by REXtac, LLC. (e.g., REXTAC (registered trademark) 2304, REXTAC (registered trademark) 2385, REXTAC (registered trademark) 2585, and REXTAC (registered trademark) 2880); VESTOPLAST (registered trademark) series manufactured by Evonik Industries AG (e.g., VESTOPLAST (registered trademark) 408, VESTOPLAST (registered trademark) 703, VESTOPLAST (registered trademark) 704, VESTOPLAST (registered trademark) 750, VESTOPLAST (registered trademark) 828, and VESTOPLAST (registered trademark) 888); Eastflex (registered trademark) series manufactured by Eastman Chemical Company (e.g., Eastflex (registered trademark) P1010); L-MODU (registered trademark) series manufactured by Idemitsu Kosan Co., Ltd. (e.g., L-MODU (registered trademark) S400, L-MODU (registered trademark) S600, and L-MODU (registered trademark) S901); Licocene (registered trademark) series manufactured by Clariant AG (e.g., Licocene (registered trademark) PP1602, Licocene (registered trademark) PP2602, Licocene (registered trademark) PP3602, and the like); AFFINITY (registered trademark) series manufactured by Dow Chemical Company (e.g., AFFINITY (registered trademark) GA1900, and AFFINITY (registered trademark) GA1950); and the like. One kind of these can be used alone, or two or more kinds of these can be used in combination. It is possible to use a combination of a commercially available olefin-based polymer and another olefin-based polymer.

The adhesive composition in accordance with an embodiment of the present invention contains the olefin-based polymer in an amount of preferably not less than 45% by weight, more preferably not less than 55% by weight, and further preferably not less than 60% by weight. In a case where the adhesive composition contains the olefin-based polymer in an amount of not less than 45% by weight, it is possible to provide an adhesive composition having more excellent self-adhesiveness. An upper limit of an amount of the olefin-based polymer contained in the adhesive composition in accordance with an embodiment of the present invention can be 100% by weight, but is more preferably not more than 95% by weight, and further preferably not more than 90% by weight.

The olefin-based polymer used in the adhesive composition in accordance with an embodiment of the present invention preferably has a storage modulus (G') at 20°C of not more than 1.0×10⁷ Pa. In a case where the storage modulus (G') at 20°C of the olefin-based polymer is not more than 1.0×10⁷ Pa, it is advantageously possible to provide an adhesive composition having excellent self-adhesiveness. The storage modulus (G') at 20°C of the olefin-based polymer is not particularly limited, and may be not less than 0.

Here, in a case where the adhesive composition in accordance with an embodiment of the present invention contains two or more types of olefin-based polymers, a storage modulus (G') at 20°C of a mixture of the two or more types of olefin-based polymers is regarded as the storage modulus (G') at 20°C of the olefin-based polymer in the adhesive composition. A storage modulus (G') is a value measured in the manner described in Examples.

A weight-average molecular weight of the olefin-based polymer is more than 40,000. In a case where the weight-average molecular weight of the olefin-based polymer is more than 40,000, it is unlikely that a breakage will occur when an adhesive composition containing the olefin-based polymer is used to form an adhesive layer. Therefore, such an olefin-based polymer can be suitably used as a base polymer of an adhesive composition. The weight-average molecular weight of the olefin-based polymer is more preferably not less than 50,000, and further preferably not less than 60,000. An upper limit of weight-average molecular weight of the olefin-based polymer is not particularly limited, and may be, for example, not more than 200,000.

The term "weight-average molecular weight" herein refers to a value obtained by gel permeation chromatography (GPC) on a polystyrene basis.

In an embodiment of the present invention, it is preferable that the olefin-based polymer has melt viscosity at 190°C of 400 mPa·s to 120,000 mPa·s. In a case where the olefin-based polymer has melt viscosity at 190°C of not less than 400 mPa·s, it is easy to control fluidity, and such an olefin-based polymer can be suitably used as a base polymer of an adhesive composition. In a case where the olefin-based polymer has melt viscosity at 190°C of not more than 120,000 mPa·s, melt viscosity of the adhesive composition is not excessively high, and therefore coating with the adhesive composition can be easily carried out. The melt viscosity at 190°C of the olefin-based polymer is more preferably 1,000 mPa·s to 100,000 mPa·s, and further preferably 10,000 mPa·s to 50,000 mPa·s. Herein, the term "melt viscosity" refers to a value measured in the manner described in Examples.

### (Adhesive composition in which no inorganic particles are blended)

In the adhesive composition in accordance with an embodiment of the present invention, no inorganic particles are blended. As early described, in the conventional hot melt-type self-adhesive agent, an inorganic filler is blended in order to provide an adhesive composition having large self-adhesive force and low tack on the adhesive surface. In the adhesive composition in accordance with an embodiment of the present invention, no inorganic particles, such as an inorganic filler, are blended. Examples of the inorganic particles that are not blended in the adhesive composition include calcium carbonate, zinc oxide, silica, aluminum silicate, talc, diatomaceous earth, silica sand, pumice powder, slate powder, mica powder, asbestos, aluminum sol, alumina white, aluminum sulfate, barium sulfate, lithopone, calcium sulfate, molybdenum disulfide, graphite, glass fiber, glass sphere, monocrystalline potassium titanate, carbon fiber, active zinc oxide, zinc carbonate, magnesium oxide, basic magnesium carbonate, litharge, red lead, white lead, calcium hydroxide, activated calcium hydroxide, titanium oxide, and the like. Therefore, there is no separation (aggregation) or precipitation of the constituents of the adhesive composition in accordance with an embodiment of the present invention. Therefore, it is possible to provide an adhesive composition having excellent productivity.

### (Wax)

The adhesive composition in accordance with an embodiment of the present invention may contain a wax. In a case where the adhesive composition in accordance with an embodiment of the present invention contains a wax, it is possible to bring about an advantage of providing an adhesive composition with reduced stickiness (tack).

Examples of the wax include: animal-based wax, such as shellac wax and beeswax; plant-based wax such as carnauba wax and sumac wax; polyolefin-based wax such as polyethylene wax, polypropylene wax, and ethylene-vinyl acetate copolymer-based wax; mineral-based wax such as paraffin wax and macrocrystalline wax; synthetic wax such as Fischer-Tropsch wax; and the like. Among these, the wax is more preferably an aliphatic hydrocarbon-based wax. In a case where the wax is an aliphatic hydrocarbon-based wax, it is possible to bring about an advantage of providing an adhesive composition with further reduced tack. Examples of the aliphatic hydrocarbon-based wax include polyolefin-based wax, paraffin wax, macrocrystalline wax, Fischer-Tropsch wax, and the like.

The adhesive composition in accordance with an embodiment of the present invention contains the wax preferably in an amount of 0% by weight to 25% by weight, more preferably in an amount of 1% by weight to 25% by weight, further preferably in an amount of 5% by weight to 20% by weight, and particularly preferably in an amount of 15% by weight to 20% by weight. In a case where the amount of the wax contained in the adhesive composition is not more than 25% by weight, it is possible to bring about an advantage that self-adhesiveness of the adhesive composition is not likely to be insufficient. In a case where the amount of the wax contained in the adhesive composition is not less than 1% by weight, it is possible to bring about an advantage of adjusting tack of the adhesive composition to an intended range.

In a case where the adhesive composition in accordance with an embodiment of the present invention contains a tackifier resin, the adhesive composition particularly preferably contains the wax in an amount of not less than 1% by weight, from the viewpoint of adjustment of tack.

A weight-average molecular weight of the wax is between 300 and 40,000. In a case where the weight-average molecular weight of the wax is not less than 300, it is easy to control fluidity, and such a wax can be suitably used as a wax. In a case where the weight-average molecular weight of the wax is not more than 40,000, viscosity of the adhesive composition is not likely to become excessively high, and therefore the adhesive composition can be easily coated. The weight-average molecular weight of the wax is more preferably 1,000 to 40,000, further preferably 5,000 to 40,000.

The wax has a transition temperature of preferably 50°C to 160°C, more preferably 80°C to 160°C, and further preferably 100°C to 160°C. In a case where the transition temperature of the wax is not less than 50°C, stickiness is not likely to occur even in a high-temperature environment. In a case where the transition temperature of the wax is not more than 160°C, a melting temperature of the adhesive composition does not become excessively high, and therefore the adhesive composition is not likely to be deteriorated by heat.

The wax has a transition heat of preferably 60 J/g to 330 J/g, more preferably 100 J/g to 200 J/g. In a case where the transition heat of the wax is not less than 60 J/g, cohesive force of the adhesive composition is not reduced, and therefore blocking is not likely to occur when the adhesive composition is stuck to another material. In a case where the transition heat of the wax is not more than 330 J/g, it is not likely that adhesive force is reduced when the adhesive compositions are stuck together.

Examples of the polyolefin-based wax include homopolymers of any of olefin monomers such as ethylene, propylene, butylene, and pentene, and copolymers obtained by copolymerization of two or more types of these olefin monomers. Specifically, the polyolefin-based wax may be low density polyethylene (LDPE), high density polyethylene (HDPE), polypropylene, polybutene, or the like. Examples of commercially available products of the polyolefin-based wax include Biscol 330-P, Biscol 440-P, Biscol 550-P, and Biscol 660-P (manufactured by Sanyo Chemical Industrial Co., Ltd.); Hi-WAX NP055, Hi-WAX NP105, Hi-WAX NP505, and Hi-WAX NP805 (manufactured by Mitsui Chemicals, Inc.); Licowax PP230, Licowax PE130, and Licowax PE520 (manufactured by Clariant AG); and the like.

Examples of commercially available products of the paraffin wax include Paraffin WAX-130 (manufactured by NIPPON SEIRO CO., LTD.), and the like.

Examples of commercially available products of the microcrystalline wax include WAXREX2480 (manufactured by Exxon Mobile Inc.); UNILIN series (manufactured by Toyo ADL Corporation); Hi-Mic series (manufactured by NIPPON SEIRO CO., LTD.); and the like.

Examples of commercially available products of the Fischer-Tropsch wax include SX105 (manufactured by NIPPON SEIRO CO., LTD.), and the like.

As the wax, one kind of these can be used alone, or two or more kinds of these can be used in combination.

### (Tackifier resin)

The adhesive composition in accordance with an embodiment of the present invention may include a tackifier resin. In a case where the adhesive composition in accordance with an embodiment of the present invention contains a tackifier resin, it is possible to bring about an advantage of providing an adhesive composition having excellent adhesiveness (self-adhesiveness).

The adhesive composition in accordance with an embodiment of the present invention contains the tackifier resin in an amount of preferably 0% by weight to 30% by weight, more preferably in an amount of 1% by weight to 30% by weight, more preferably in an amount of 5% by weight to 25% by weight, and further preferably in an amount of 15% by weight to 25% by weight. In a case where the amount of the tackifier resin contained in the adhesive composition is not more than 30% by weight, it is possible to bring about an advantage that tack of the adhesive composition is not likely to be excessive. In a case where the amount of the tackifier resin contained in the adhesive composition is not less than 1% by weight, it is possible to bring about an advantage of adjusting adhesiveness of the adhesive composition to an intended range.

In an embodiment of the present invention, the tackifier resin may be a natural resin, a petroleum-based resin, or a combination thereof. Examples of the tackifier resin include rosin acid, rosin ester, a hydrocarbon resin, a synthetic polyterpene resin, a natural terpene resin, hydrogen additives of these, combinations of a plurality of resins, and the like.

Specific examples of the tackifier resin include: derivatives of rosins and modified rosins including rosin alcohol, methyl esters of rosin, diethylene glycol esters of rosin, glycerol esters of rosin, and partially hydrogenated rosins, completely hydrogenated rosins, or polymerized rosins thereof, and pentaerythritol esters and partially hydrogenated rosins, completely hydrogenated rosins, or polymerized rosins thereof; natural resins commercially available under the trade names such as gum rosin, wood rosin, and tall oil rosin; modified rosins such as polymerized rosins and partially hydrogenated rosins; polyterpene-based resins such as α-pinene polymers, β-pinene polymers, and dipentene polymers; terpene modified products such as a terpene-phenol copolymer and an α-pinene-phenol copolymer; aliphatic petroleum resins; alicyclic petroleum resins; cyclopentadiene resins; aromatic petroleum resins; phenol-based resins; alkylphenol-acetylene-based resins; styrene-based resins; xylene-based resins; coumarone-indene resins; a copolymer of vinyl toluene and α-methyl styrene; and the like. One kind of these can be used alone, or two or more kinds of these can be used in combination.

As the tackifier resin, a commercially available product may be used. Examples of commercially available tackifier resins include I-MARV (registered trademark) P-100 manufactured by Idemitsu Kosan Co., Ltd., Sylvalite (registered trademark) RE-100L manufactured by Kraton, ARKON (registered trademark) P-100 manufactured by Arakawa Chemical Industries, Ltd., and the like. One kind of these can be used alone, or two or more kinds of these can be used in combination. It is possible to use a combination of a commercially available tackifier resin and another tackifier resin.

### (Other additives)

The adhesive composition in accordance with an embodiment of the present invention may further contain, if necessary, an additive other than the above described components, provided that the effect of the present invention is not impaired. Examples of such additives include stabilizers, fluorescent agents, antioxidants, ultraviolet absorbers, colorants, and the like.

An amount of the other additives contained in the adhesive composition is not limited as long as the effect of the present invention is not impaired, and may be, for example, not more than 1% by weight.

The adhesive composition in accordance with an embodiment of the present invention may contain a component which is in a liquid form at normal temperature, if necessary. However, the absence of a liquid component (such as an oil or a liquid resin) eliminates a risk that the liquid component of the adhesive composition seeps through a substrate.

### (Adhesive composition)

The adhesive composition in accordance with an embodiment of the present invention can be produced by heating and kneading an olefin-based polymer and, optionally, a wax and a tackifier resin at 170°C to 200°C, preferably at 185°C. A method of heating and kneading is not particularly limited, and may be a method using, for example, a kneader-ruder, an extruder, a Banbury mixer, a roller, or the like. In a case where the temperature at kneading is not less than 170°C, crystals contained in the olefin-based polymer melt and disperse uniformly, and stable performance can be exhibited. In a case where the temperature at kneading is not more than 200°C, it is not likely that the olefin-based polymer will be deteriorated by heat.

The adhesive composition in accordance with an embodiment of the present invention has a storage modulus (G') at 20°C of 0 to 1.5×10⁷ Pa, more preferably 6.4×10⁵ to 1.0×10⁷ Pa, further preferably 7.0×10⁵ to 1.0×10⁷ Pa, and particularly preferably 1.4×10⁶ to 9.1×10⁶ Pa. According to the configuration, it is possible to provide an adhesive composition having excellent self-adhesiveness.

The adhesive composition in accordance with an embodiment of the present invention has a storage modulus (G') at 40°C of 5.3×10⁵ Pa to 1.0×10⁹ Pa, preferably 8.4×10⁵ Pa to 1.0×10⁹ Pa, more preferably 1.5×10⁶ Pa to 1.0×10⁹ Pa, and further preferably 1.5×10⁶ Pa to 8.5×10⁶ Pa. According to the configuration, it is possible to provide an adhesive composition that is not likely to break a substrate (e.g., paper) when peeling off the adhesive composition.

The adhesive composition in accordance with an embodiment of the present invention has peel strength (hereinafter, referred to also as self-adhesive force) at 20°C of preferably not less than 6 N/cm, more preferably not less than 7 N/cm, further preferably not less than 8 N/cm, after the adhesive compositions are adhered to each other and left to stand still at 20°C for 24 hours. In a case where the self-adhesive force is not less than 6 N/cm, it is possible to provide an adhesive composition having excellent self-adhesiveness. Self-adhesive force is a value measured in the manner described in Examples.

The adhesive composition in accordance with an embodiment of the present invention has peel strength from fine paper (hereafter simply referred to also as peel strength) at 20°C of preferably not more than 0.5 N/cm, more preferably not more than 0.3 N/cm, further preferably not more than 0.1 N/cm, after the adhesive composition is adhered to fine paper, pressurized at 3.6 kPa at 40°C, and left to stand still for 24 hours. In a case where the peel strength of the adhesive composition is not more than 0.5 N/cm, the adhesive composition can be easily peeled off without breaking a substrate (e.g., paper). In other words, it is possible to bring about an advantage of excellent anti-blocking property.

The adhesive composition in accordance with an embodiment of the present invention preferably does not contain a solvent. In a case where the adhesive composition in accordance with an embodiment of the present invention does not contain a solvent, it is not necessary to evaporate the solvent after application of the adhesive composition. Therefore, it is possible to increase productivity, and it does not require large-scale equipment such as a drying oven. In addition, a residual solvent does not come into question. Therefore, the adhesive composition can be suitably used as a self-adhesive agent for food. Herein, the phrase "not contain a solvent" means that an amount of a solvent contained in the adhesive composition is not more than 1% by weight.

The amount of a solvent contained in the adhesive composition (also referred to as a residual solvent amount) is more preferably not more than 0.1% by weight, and particularly preferably 0. The amount of a solvent contained in the adhesive composition can be obtained, for example, by gas chromatography.

The adhesive composition in accordance with an embodiment of the present invention which is configured as described above has excellent self-adhesiveness and anti-blocking property.

Therefore, the adhesive composition can be suitably used as a self-adhesive agent in particular.

The present invention is not limited to the foregoing embodiment, but can be altered variously by a skilled person in the art within the scope of the claims. The present invention also encompasses, in its technical scope, any embodiment derived by appropriately combining technical means disclosed in differing embodiments.

### Examples

The following description will more specifically discuss the present invention with reference to Examples. Note, however, that the present invention is not limited to those Examples.

### [Material]

### (Olefin-based polymer)

As the olefin-based polymer, the following polymers were used.
REXTAC (registered trademark) RT2304 [ethylene copolymer] manufactured by REXtac, LLC., storage modulus (G') at 20°C: 2.2×10⁶ Pa, melt viscosity at 190°C: 400 mPa·s
REXTAC (registered trademark) RT2880 [1-butylene copolymer] manufactured by REXtac, LLC., storage modulus (G') at 20°C: 1.0×10⁷ Pa, melt viscosity at 190°C: 8,000 mPa·s
VESTOPLAST (registered trademark) 408 manufactured by Evonik Industries AG, storage modulus (G') at 20°C: 1.5×10⁷ Pa, melt viscosity at 190°C: 8,000 mPa·s
VESTOPLAST (registered trademark) 828 manufactured by Evonik Industries AG, storage modulus (G') at 20°C: 1.9×10⁶ Pa, melt viscosity at 190°C: 25,000 mPa·s
VESTOPLAST (registered trademark) 888 manufactured by Evonik Industries AG, storage modulus (G') at 20°C: 3.7×10⁶ Pa, melt viscosity at 190°C: 120,000 mPa·s

### (Wax)

Biscol (registered trademark) 330P [polypropylene wax] manufactured by Sanyo Chemical Industrial Co., Ltd., transition temperature: 153°C, transition heat: 105 J/g
WAXREX (registered trademark) 2480 [microcrystalline wax] manufactured by Exxon Mobile Inc., transition temperature: 55°C, transition heat: 133 J/g
SX105 [Fischer-Tropsch wax] manufactured by NIPPON SEIRO CO., LTD., transition temperature: 114°C, transition heat: 322 J/g
Licowax PP230 [polypropylene wax] manufactured by Clariant AG, transition temperature: 157°C, transition heat: 64 J/g

### (Tackifier resin)

I-MARV (registered trademark) P-100 [hydrogenated petroleum-based resin] manufactured by Idemitsu Kosan Co., Ltd.
Sylvalite (registered trademark) RE-100L [rosin ester] manufactured by Kraton
Sylvares (registered trademark) TP2040HM [terpene phenol] manufactured by Kraton
Quintone (registered trademark) S-195 [aliphatic hydrocarbon-based resin] manufactured by Zeon Corporation

### (Styrene-based elastomer)

Quintac (registered trademark) 3433N [styrene-isoprene block copolymer] manufactured by Zeon Corporation

### (Plasticizer)

DINA [diisononyl adipate] manufactured by DAIHACHI CHEMICAL INDUSTRY CO., LTD.

### (Inorganic filler)

CARBITAL (registered trademark) S [calcium carbonate] manufactured by IMERYS Minerals Japan

### [Evaluation method]

(Storage moduli of olefin-based polymer and adhesive composition)

A storage modulus of the olefin-based polymer or the adhesive composition was measured with use of a dynamic viscoelasticity measurement device (manufactured by TA Instruments Japan Inc.: rheometer ARES-RDA). The following (1) through (3) indicate measurement procedures.
(1) A sample, which was the olefin-based polymer or the adhesive composition having a diameter of 8.0 mm and a height of 2.0 mm, was vertically sandwiched by aluminum parallel plates each having a diameter of 8 mm, and was then cooled down to approximately -40°C.
(2) The sample was heated up to 150°C in a temperature lamp mode with a frequency of 1 Hz, a strain of 0.1%, and 10°C/min, and a storage modulus at a predetermined temperature was measured.
(3) A numerical value at 20°C±1°C was read as a storage modulus (G') at 20°C of the sample (i.e., the olefin-based polymer or the adhesive composition), and a numerical value at 40°C±1°C was read as a storage modulus (G') at 40°C of the sample.

### (Self-adhesiveness and anti-blocking property of adhesive composition)

### <Preparation of sample>

A sample for measuring self-adhesiveness and anti-blocking property was prepared by applying, to fine paper (OKH-55, manufactured by Oji Paper Co., Ltd.) as a substrate, the adhesive composition by a thickness of 50 µm with use of a slot coater (manufactured by SUNTOOL CORPORATION).

### <Self-adhesiveness of adhesive composition>

The self-adhesiveness of the adhesive composition was measured and evaluated according to the following procedures (1) through (4). (1) The sample prepared in <Preparation of sam-ple> was cut out in a size of 120 mm × 30 mm, and a surface (paper surface) opposite to a surface to which the adhesive composition was applied was stuck to a PP resin plate.
(2) A sample separately cut out in a size of 100 mm × 25 mm was stuck to an adhesive layer surface of the sample which had been stuck to the PP resin plate so that the adhesive layer surfaces were in contact with each other, and stuck by pressure applied with a single to-and-fro movement of a 2 kg roller, and then left to stand still in an environment at 20°C for 24 hours.
(3) After the leaving to stand still, the sample was peeled off in a direction of 180 degrees with use of Autograph (registered trademark) (AGS-J, manufactured by Shimadzu Corporation) in an environment at 20°C at a peeling speed of 300 mm/min. Based on mean test force (N/2.5 cm), peel strength (unit: N/cm) per unit width was calculated.
(4) The self-adhesiveness of the adhesive composition was evaluated based on the following criteria. In a case where the fine paper which was a substrate was broken during measurement, peel strength was regarded as not less than 6 N/cm.

Excellent: The peel strength is not less than 6 N/cm and the fine paper which is the substrate is broken.

Good: The peel strength is not less than 6 N/cm or the fine paper which is the substrate is broken.

Poor: The peel strength is less than 6 N/cm and the fine paper which is the substrate is not broken.

### <Anti-blocking property of adhesive composition>

The anti-blocking property of the adhesive composition was measured and evaluated according to the following procedures (1) through (4).
(1) The sample prepared in <Preparation of sample> was cut out in a size of 120 mm × 30 mm, and a surface (paper surface) opposite to a surface to which the adhesive composition was applied was stuck to a PP resin plate.
(2) With respect to the adhesive layer surface of the sample, fine paper (OKH-55, manufactured by Oji Paper Co., Ltd.) in a size of 100 mm × 25 mm was put and stuck by pressure applied with a single to-and-fro movement of a 2 kg roller, and the laminate thus obtained was left to stand still at 40°C under pressure of 3.6 kPa for 24 hours.
(3) After the leaving to stand still, the fine paper (100 mm × 25 mm) was peeled off from the sample in a direction of 180 degrees with use of Autograph (registered trademark) (AGS-J, manufactured by Shimadzu Corporation) in an environment at 20°C at a peeling speed of 300 mm/min. Based on mean test force (N/2.5 cm), peel strength (unit: N/cm) per unit width was calculated.
(4) The anti-blocking property of the adhesive composition was evaluated based on the following criteria.

Good: The peel strength is less than 0.5 N/cm and the sample was peeled off at the interface between the fine paper and the adhesive surface.

Poor: The peel strength is not less than 0.5 N/cm or the fine paper which is the substrate is broken.

### (Presence or absence of separation and precipitation of adhesive composition)

The adhesive composition (50 g) was put into a glass vial (manufactured by ISOYA GLASS INDUSTRY CO., LTD., M140), and was left to stand still at 180°C for 24 hours. After the leaving to stand still, separation and precipitation of the components were checked by visual inspection.

Good: Separation and precipitation were not visually confirmed.

Poor: Separation or precipitation was visually confirmed.

### <Melt viscosity of olefin-based polymer>

The melt viscosity of the olefin-based polymer was measured using a method described in JIS K6862 at a described temperature with use of a Brookfield-type viscometer (H3 rotor).

### <Transition temperature and transition heat of wax>

The transition temperature and transition heat of the wax were measured using a differential scanning calorimeter (DSC) with a method described in JIS K 7120. Specifically, the transition temperature and transition heat of the wax were measured according to the following procedures (1) through (3).
(1) The wax (15 mg) was heated to 200°C at a rate of 20°C/min with use of DSC3100SR manufactured by Bruker axs.
(2) After the heating, the sample was cooled down to minus 100°C at a rate of 10°C/min, and thermal history of the sample was set to the same condition.
(3) Heating was carried out at a rate of 10°C/min, and the transition temperature and transition heat were calculated from a temperature of the transition peak and a peak area which were measured. In a case where there were a plurality of transition peaks, a temperature and an area of a transition peak with the largest area were used.

### [Examples]

### (Example 1)

An olefin-based polymer (REXTAC (registered trademark) RT2304) (65% by weight), an aliphatic hydrocarbon-based wax (Biscol (registered trademark) 330P) (15% by weight), and a tackifier resin (I-MARV (registered trademark) P-100) (20% by weight) were kneaded in a heating kneader (SV1-1GH-E type kneader, manufactured by MORIYAMA) at 185°C, and thus an adhesive composition (100% by weight) was prepared.

### (Example 2)

An adhesive composition was prepared in a manner similar to that of Example 1, except that the olefin-based polymer was changed to VESTOPLAST (registered trademark) 828 (65% by weight).

### (Example 3)

An adhesive composition was prepared in a manner similar to that of Example 1, except that the olefin-based polymer was changed to VESTOPLAST (registered trademark) 888 (65% by weight).

### (Example 4)

An adhesive composition was prepared in a manner similar to that of Example 1, except that the olefin-based polymer was changed to REXTAC (registered trademark) RT2880 (65% by weight).

### (Example 5)

An adhesive composition was prepared in a manner similar to that of Example 1, except that the olefin-based polymer was changed to a mixture of VESTOPLAST (registered trademark) 408 (52% by weight) and VESTOPLAST (registered trademark) 828 (13% by weight).

### (Example 6 - comparative example)

An adhesive composition was prepared in a manner similar to that of Example 2, except that the aliphatic hydrocarbon-based wax was changed to WAXREX (registered trademark) 2480 (15% by weight).

### (Example 7)

An adhesive composition was prepared in a manner similar to that of Example 2, except that the aliphatic hydrocarbon-based wax was changed to SX-105 (15% by weight).

### (Example 8)

An adhesive composition was prepared in a manner similar to that of Example 2, except that the aliphatic hydrocarbon-based wax was changed to Licowax (registered trademark) PP230 (15% by weight).

### (Example 9)

An adhesive composition was prepared in a manner similar to that of Example 2, except that the tackifier resin was changed to Sylvalite (registered trademark) RE-100L (15% by weight).

### (Example 10)

An adhesive composition was prepared in a manner similar to that of Example 1, except that the olefin-based polymer was changed to VESTOPLAST (registered trademark) 828 (45% by weight), the amount of the aliphatic hydrocarbon-based wax (Biscol (registered trademark) 330P) was changed to 25% by weight, and the amount of the tackifier resin (I-MARV (registered trademark) P-100) was changed to 30% by weight.

### (Example 11)

An adhesive composition was prepared in a manner similar to that of Example 1, except that the olefin-based polymer was changed to VESTOPLAST (registered trademark) 828 (80% by weight), the amount of the aliphatic hydrocarbon-based wax (Biscol (registered trademark) 330P) was changed to 5% by weight, and the amount of the tackifier resin (I-MARV (registered trademark) P-100) was changed to 15% by weight.

For the resulting adhesive compositions of Examples 1 through 11, a storage modulus at 20°C, a storage modulus at 40°C, self-adhesiveness, anti-blocking property, and presence or absence of separation and precipitation were measured and evaluated. Results are shown in Table 1. Numerical values of each component in Table 1 each indicate a percentage by weight of each component in the adhesive composition.

**[Table 1]**

| Components | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Olefin-based polymer | RT 2304 | 65 | | | | | | | | | | |
| | VESTOPLAST 828 | | 65 | | | 13 | 65 | 65 | 65 | 65 | 45 | 80 |
| | VESTOPLAST 888 | | | 65 | | | | | | | | |
| | RT2880 | | | | 65 | | | | | | | |
| | VESTOPLAST 408 | | | | | 52 | | | | | | |
| Wax | Biscol 330P | 15 | 15 | 15 | 15 | 15 | | | | 15 | 25 | 5 |
| | WAXREX2480 | | | | | | 15 | | | | | |
| | SX-105 | | | | | | | 15 | | | | |
| | Licowax PP230 | | | | | | | | 15 | | | |
| Inorganic filler | CARBITAL S | | | | | | | | | | | |
| Tackifier resin | I-MARV P-100 | 20 | 20 | 20 | 20 | 20 | 20 | 20 | 20 | | 30 | 15 |
| | Sylvalite RE-100L | | | | | | | | | 20 | | |
| | Quintone S-195 | | | | | | | | | | | |
| | Sylvares TP2040HM | | | | | | | | | | | |
| Styrene-based elastomer | Quintac 3433 N | | | | | | | | | | | |
| Plasticizer | DINA | | | | | | | | | | | |
| Total | | 100 | 100 | 100 | 100 | 100 | 100 | 100 | 100 | 100 | 100 | 100 |
| Storage modulus (Pa) of olefin-based polymer at 20°C | | 2.2×10⁶ | 1.9×10⁶ | 3.7×10⁶ | 1.0×10⁷ | 1.0×10⁷ | 1.9×10⁶ | 1.9×10⁶ | 1.9×10⁶ | 1.9×10⁶ | 1.9×10⁶ | 1.9×10⁶ |
| Storage modulus (Pa) of adhesive composition at 20°C | | 6.0×10⁶ | 3.5×10⁶ | 5.2×10⁶ | 5.0×10⁶ | 1.5×10⁷ | 6.4×10⁶ | 5.1×10⁶ | 3.8×10⁶ | 6.8×10⁶ | 9.1×10⁶ | 1.4×10⁶ |
| Evaluation of self-adhesiveness | Peel strength (N/cm) | 7.5 | 8.7 | 7.8 | 12.8 | 7.2 | 9.6 | 11.2 | 8.6 | 6.7 | 8.1 | 9.5 |
| | Peeling state | Interface | Interface | Interface | Base material broken | Interface | Interface | Base material broken | Interface | Interface | Interface | Interface |
| | Evaluation | Good | Good | Good | Excellent | Good | Good | Excellent | Good | Good | Good | Good |
| Storage modulus (Pa) of adhesive composition at 40°C | | 2.8×10⁶ | 1.6×10⁶ | 2.4×10⁶ | 1.9×10⁶ | 8.5×10⁶ | 8.4×10⁵ | 1.8×10⁶ | 1.5×10⁶ | 3.3×10⁶ | 5.0×10⁶ | 5.3×10⁵ |
| Evaluation of anti-blocking property | Peel strength (N/cm) | 0.0 | 0.0 | 0.0 | 0.1 | 0.1 | 0.2 | 0.1 | 0.0 | 0.0 | 0.0 | 0.3 |
| | Peeling state | Interface | Interface | Interface | Interface | Interface | Interface | Interface | Interface | Interface | Interface | Interface |
| | Evaluation | Good | Good | Good | Good | Good | Good | Good | Good | Good | Good | Good |
| Presence or absence of separation and precipitation | | Good | Good | Good | Good | Good | Good | Good | Good | Good | Good | Good |
| Total evaluation | | Good | Good | Good | Good | Good | Good | Good | Good | Good | Good | Good |

### [Comparative Examples]

### (Comparative Example 1)

An adhesive composition was prepared in a manner similar to that of Example 1, except that the olefin-based polymer was changed to VESTOPLAST (registered trademark) 408 (65% by weight).

### (Comparative Example 2)

An adhesive composition was prepared in a manner similar to that of Example 1, except that the olefin-based polymer was changed to a mixture of VESTOPLAST (registered trademark) 408 (58% by weight) and VESTOPLAST (registered trademark) 828 (7% by weight).

### (Comparative Example 3)

An adhesive composition was prepared in a manner similar to that of Example 2, except that the amount of the tackifier resin (I-MARV (registered trademark) P-100) was changed to 35% by weight and no wax was added.

### (Comparative Example 4)

An adhesive composition was prepared in a manner similar to that of Example 2, except that the amount of the aliphatic hydrocarbon-based wax (Biscol (registered trademark) 330P) was changed to 35% by weight, and no tackifier resin was added.

### (Comparative Example 5)

An adhesive composition was prepared in a manner similar to that of Example 2, except that an inorganic filler (CARBITAL (registered trademark) S) (15% by weight), which was inorganic particles, was added and no wax was added.

### (Comparative Example 6)

In a heating kneader (SV1-1GH-E type kneader, manufactured by MORIYAMA), Quintone (registered trademark) S-195, which is a tackifier resin (20% by weight), styrene-based elastomer Quintac (registered trademark) 3433N (40% by weight), Sylvares (registered trademark) HP2040HM (20 weight%), and DINA (4% by weight), and CARBITAL (registered trademark) S (16% by weight), which is an inorganic filler, were kneaded at 185°C, and thus an adhesive composition (100% by weight) was prepared.

For the resulting adhesive compositions of Comparative Examples 1 through 6, a storage modulus at 20°C, a storage modulus at 40°C, self-adhesiveness, anti-blocking property, and presence or absence of separation and precipitation were measured and evaluated. Results are shown in Table 2. Numerical values of each component in Table 2 each indicate a percentage by weight of each component in the adhesive composition.

**[Table 2]**

| Components | | Comparative Example 1 | Comparative Example 2 | Comparative Example 3 | Comparative Example 4 | Comparative Example 5 | Comparative Example 6 |
|---|---|---|---|---|---|---|---|
| Olefin-based polymer | RT 2304 | | | | | | |
| | VESTOPLAST 828 | | 7 | 65 | 65 | 65 | |
| | VESTOPLAST 888 | | | | | | |
| | RT 2880 | | | | | | |
| | VESTOPLAST 408 | 65 | 58 | | | | |
| Wax | Biscol 330P | 15 | 15 | | 35 | | |
| | WAXREX2480 | | | | | | |
| | SX 105 | | | | | | |
| | Licowax PP230 | | | | | | |
| Inorganic filler | CARBITAL S | | | | | 15 | 16 |
| Tackifier resin | I-MARV P-100 | 20 | 20 | 35 | | 20 | |
| | Sylvalite RE-100L | | | | | | |
| | Quintone S-195 | | | | | | 20 |
| | Sylvares TP2040HM | | | | | | 20 |
| Styrene-based elastomer | Quintac 3433 N | | | | | | 40 |
| Plasticizer | DINA | | | | | | 4 |
| Total | | 100 | 100 | 100 | 100 | 100 | 100 |
| Storage modulus (Pa) of olefin-based polymer at 20°C | | 1.5×10⁷ | 1.2×10⁷ | 1.9×10⁶ | 1.9×10⁶ | 1.9×10⁶ | - |
| Storage modulus (Pa) of resin composition at 20°C | | 3.5×10⁷ | 2.0×10⁷ | 6.4×10⁵ | 9.3×10⁷ | 7.0×10⁵ | 3.6×10⁵ |
| Evaluation of self-adhesiveness | Peel strength (N/cm) | 4.5 | 5.3 | 12.7 | 0.2 | 9.2 | 6.2 |
| | Peeling state | Interface | Interface | Base material broken | Interface | Interface | Interface |
| | Evaluation | Poor | Poor | Excellent | Poor | Good | Good |
| Storage modulus (Pa) of resin composition at 40°C | | 2.0×10⁷ | 7.5×10⁶ | 1.7×10⁵ | 4.3×10⁷ | 2.4×10⁵ | 2.0×10⁵ |
| Evaluation of blocking property | Peel strength (N/cm) | 0.0 | 0.1 | 1.2 | 0.0 | 6.2 | 1.0 |
| | Peeling state | Interface | Interface | Base material broken | Interface | Base material broken | Base material broken |
| | Evaluation | Good | Good | Poor | Good | Poor | Poor |
| Presence or absence of separation and precipitation | | Good | Good | Good | Good | Poor | Poor |
| Total evaluation | | Poor | Poor | Poor | Poor | Poor | Poor |

### [Results]

As is clear from the comparison between Tables 1 and 2, a comparison of Examples 1 through 11 with Comparative Examples 1, 2, and 4 showed that, in the cases where the storage modulus at 20°C of the adhesive composition was more than 1.5×10⁷ Pa, the self-adhesiveness of the resulting adhesive composition was poor. Moreover, a comparison of Examples 1 through 11 with Comparative Examples 3 and 5 showed that, in the cases where the storage modulus at 40°C of the adhesive composition was less than 5.3×10⁵ Pa, the anti-blocking property of the resulting adhesive composition was poor. Further, a comparison of Examples 1 through 11 with Comparative Examples 5 and 6 showed that, in the case where inorganic particles were blended in the adhesive composition, separation or precipitation occurred, resulting in poor productivity.

These results indicated that the adhesive compositions which had the storage modulus at 20°C and the storage modulus at 40°C falling within the predetermined ranges and in which no inorganic particles were blended exhibit excellent self-adhesiveness and anti-blocking property, and can be efficiently produced.

### Industrial Applicability

The adhesive composition in accordance with an embodiment of the present invention does not contain a solvent and is excellent in productivity and self-adhesiveness. Therefore, the adhesive composition in accordance with an embodiment of the present invention can be suitably used as a self-adhesive agent. Specifically, the adhesive composition in accordance with an embodiment of the present invention can be suitably used for applications such as binding tapes for food (such as vegetables), and adhesive-type envelopes.

## Claims

1. An adhesive composition comprising an olefin-based polymer, having a weight-average molecular weight of more than 40,000, and a wax, having a weight-average molecular weight between 300 and 40,000, weight-average molecular weight being obtained by gel permeation chromatography on polystyrene basis,
- in said adhesive composition, no inorganic particles being blended,
- said adhesive composition having a storage modulus, measured using a dynamic viscoelasticity measurement device as described in the description, at 20°C of 0 to 1.5×10⁷ Pa, and a storage modulus at 40°C of 5.3×10⁵ Pa to 1.0×10⁹ Pa, and
- the wax having a transition temperature, measured using a differential scanning calorimeter as described in the description, of 80°C to 160°C.

2. The adhesive composition as set forth in claim 1, wherein:
- the olefin-based polymer has a storage modulus at 20°C of not more than 1.0×10⁷ Pa.

3. The adhesive composition as set forth in claim 1 or 2, wherein:
- the olefin-based polymer has melt viscosity at 190°C of 400 mPa·s to 120,000 mPa·s.

4. The adhesive composition as set forth in any one of claims 1 through 3, comprising:
- the olefin-based polymer in an amount of 45% by weight to 100% by weight;
- the wax in an amount of 1% by weight to 25% by weight; and
- a tackifier resin in an amount of 0% by weight to 30% by weight.

5. The adhesive composition as set forth in any one of claims 1 through 4, wherein:
- the wax has a transition heat, measured using a differential scanning calorimeter as described in the description, of 60 J/g to 330 J/g.

6. The adhesive composition as set forth in any one of claims 1 through 5, wherein:
- after surfaces of adhesive layers, each of which is constituted by said adhesive composition, are adhered to each other and then the adhesive layers are left to stand still at 20°C for 24 hours, peel strength, measured as described in the description, at 20°C is not less than 6 N/cm.

7. The adhesive composition as set forth in any one of claims 1 through 6, wherein:
- after an adhesive layer constituted by said adhesive composition is brought into close contact with fine paper at 40°C under pressure of 3.6 kPa for 24 hours, peel strength, measured as described in the description, at 20°C between the adhesive layer and the fine paper is not more than 0.5 N/cm.

## Patentansprüche

1. Klebstoffzusammensetzung, umfassend ein Polymer auf Olefinbasis mit einem gewichtsmittleren Molekulargewicht von mehr als 40.000 und ein Wachs mit einem gewichtsmittleren Molekulargewicht zwischen 300 und 40.000, wobei das gewichtsmittlere Molekulargewicht durch Gelpermeationschromatographie auf Polystyrolbasis erhalten wird,
- wobei in der Klebstoffzusammensetzung keine anorganischen Partikel eingemischt sind,
- wobei die Klebstoffzusammensetzung einen Speichermodul, gemessen unter Benutzen einer Vorrichtung zur dynamischen Messung der Viskoelastizität wie in der Beschreibung beschrieben, bei 20 °C von 0 bis 1,5 × 10⁷ Pa und einen Speichermodul bei 40 °C von 5,3 × 10⁵ Pa bis 1,0 × 10⁹ Pa aufweist und
- wobei das Wachs eine Übergangstemperatur, gemessen unter Benutzen eines Differentialkalorimeters wie in der Beschreibung beschrieben, von 80 °C bis 160 °C aufweist.

2. Klebstoffzusammensetzung nach Anspruch 1, wobei:
- das Polymer auf Olefinbasis einen Speichermodul bei 20 °C von nicht mehr als 1,0 × 10⁷ Pa aufweist.

3. Klebstoffzusammensetzung nach Anspruch 1 oder 2, wobei:
- das Polymer auf Olefinbasis eine Schmelzviskosität bei 190 °C von 400 mPa·s bis 120.000 mPa·s aufweist.

4. Klebstoffzusammensetzung nach einem der Ansprüche 1 bis 3, umfassend:
- das Polymer auf Olefinbasis in einer Menge von 45 Gewichts-% bis 100 Gewichts-%;
- das Wachs in einer Menge von 1 Gewichts-% bis 25 Gewichts-%; und
- ein Klebrigmacherharz in einer Menge von 0 Gewichts-% bis 30 Gewichts-%.

5. Klebstoffzusammensetzung nach einem der Ansprüche 1 bis 4, wobei:
- das Wachs eine Übergangswärme, gemessen mit einem Differentialkalorimeter wie in der Beschreibung beschrieben, von 60 J/g bis 330 J/g aufweist.

6. Klebstoffzusammensetzung nach einem der Ansprüche 1 bis 5, wobei:
- nachdem Oberflächen von Klebeschichten, die jeweils aus der Klebstoffzusammensetzung gebildet sind, aneinandergeklebt werden und dann die Klebeschichten 24 Stunden lang bei 20 °C ruhen gelassen werden, die Schälfestigkeit, gemessen wie in der Beschreibung beschrieben, bei 20 °C nicht weniger als 6 N/cm beträgt.

7. Klebstoffzusammensetzung nach einem der Ansprüche 1 bis 6, wobei:
- nachdem eine Klebeschicht, die aus der Klebstoffzusammensetzung gebildet ist, 24 Stunden lang bei 40 °C unter einem Druck von 3,6 kPa in engen Kontakt mit feinem Papier gebracht wird, die Schälfestigkeit, gemessen wie in der Beschreibung beschrieben, bei 20 °C zwischen der Klebeschicht und dem feinen Papier nicht mehr als 0,5 N/cm beträgt.

## Revendications

1. Composition adhésive comprenant un polymère à base d'oléfine, ayant un poids moléculaire moyen en poids supérieur à 40 000, et une cire, ayant un poids moléculaire moyen en poids compris entre 300 et 40 000, le poids moléculaire moyen en poids étant obtenu par chromatographie par perméation de gel sur base de polystyrène,
- dans ladite composition adhésive, aucune particule inorganique n'étant mélangée,
- ladite composition adhésive ayant un module de conservation, mesuré à l'aide d'un dispositif de mesure de la viscoélasticité dynamique tel que décrit dans la description, à 20 °C de 0 à 1,5 x 10⁷ Pa, et un module de conservation à 40 °C de 5,3 x 10⁵ Pa à 1,0 x 10⁹ Pa, et
- la cire ayant une température de transition, mesurée à l'aide d'un calorimètre différentiel à balayage tel que décrit dans la description, comprise entre 80 °C et 160 °C.

2. Composition adhésive telle que définie dans la revendication 1, dans laquelle :
- le polymère à base d'oléfine a un module de conservation à 20 °C ne dépassant pas 1,0 x 10⁷ Pa.

3. Composition adhésive telle que définie dans la revendication 1 ou la revendication 2, dans laquelle :
- le polymère à base d'oléfine a une viscosité à l'état fondu à 190 °C de 400 mPa · s à 120 000 mPa · s.

4. Composition adhésive telle que définie dans l'une quelconque des revendications 1 à 3, comprenant :
- le polymère à base d'oléfine en une quantité comprise entre 45 % et 100 % en poids ;
- la cire en une quantité comprise entre 1 % et 25 % en poids ; et
- une résine tackifiante en une quantité comprise entre 0 % et 30 % en poids.

5. Composition adhésive telle que définie dans l'une quelconque des revendications 1 à 4, dans laquelle :
- la cire a une chaleur de transition, mesurée à l'aide d'un calorimètre différentiel à balayage tel que décrit dans la description, comprise entre 60 J/g et 330 J/g.

6. Composition adhésive telle que définie dans l'une quelconque des revendications 1 à 5, dans laquelle :
- après que les surfaces des couches adhésives, dont chacune est constituée par ladite composition adhésive, ont été collées les unes aux autres et que les couches adhésives ont ensuite été laissées au repos à 20 °C pendant 24 heures, la résistance au pelage, mesurée comme décrit dans la description, à 20 °C n'est pas inférieure à 6 N/cm.

7. Composition adhésive telle que définie dans l'une quelconque des revendications 1 à 6, dans laquelle :
- après qu'une couche adhésive constituée par ladite composition adhésive a été mise en contact étroit avec du papier fin à 40 °C sous une pression de 3,6 kPa pendant 24 heures, la résistance au pelage, mesurée comme décrit dans la description, à 20 °C entre la couche adhésive et le papier fin n'est pas supérieure à 0,5 N/cm.
